Europäisches Patentamt

European Patent Office

Office européen des brevets

(11) Publication number: **0 389 190**
A2

## (12) EUROPEAN PATENT APPLICATION

(21) Application number: **90302827.2**

(51) Int. Cl.⁵: **F24F 3/04**

(22) Date of filing: **15.03.90**

(30) Priority: **18.03.89 GB 8906265**

(43) Date of publication of application:
**26.09.90 Bulletin 90/39**

(84) Designated Contracting States:
**AT BE CH DE DK ES FR GR IT LI LU NL SE**

(71) Applicant: **E.I. GROUP HOLDINGS LIMITED
Kerr House, 19-23 Fore Street
Ipswich, Suffolk IP4 1JW(GB)**

(72) Inventor: **Yardley, David John
38 Knowle Wood Road
Dorridge, Solihull, West Midlands(GB)**

(74) Representative: **Healy, Cecilia Patricia et al
E.N. Lewis & Taylor 5 The Quadrant
Coventry CV1 2EL(GB)**

(54) **Pre-cooled dry or like cooling apparatus.**

(57) A dry or like cooling apparatus and method primarily for an air conditioning system is provided in which a heat exchanger or cooler (32) is subjected to an air stream (A) for transfer of heat from fluid e.g. water in the cooler (32) to the air and in which a fine spray or mist of water is introduced into the air stream (A) so as to be substantially absorbed by the latter. As a result the air stream is adiabatically cooled for effecting a considerably improved cooling action on the cooler (32) especially under conditions of high ambient temperature e.g. in the region of 30° C. The water spray may be intermittent or pulsed and may be controlled in dependence on the temperature of the water passing through the cooler (32) and/or of the air stream. Since mains water can be used and any slight deposition of water soon dries there is little or no risk of Legionella bacteria breeding as compared with a wet cooling tower whilst the apparatus occupies considerably less space than a dry cooler.

FIG 3

## Pre-Cooled Dry or like Cooling Apparatus

The present invention relates to cooling systems of the dry cooling type primarily for use in air conditioning systems, particularly adiabatically precooled dry cooling systems.

Commercial and industrial air conditioning systems generally make use of wet cooling towers, positioned on the roofs of buildings in which the systems are installed, to remove heat from the circulating water of the system. The water is sprayed over a "fill" in the form of a plastic mesh which exposes a large area of wetted surface for a forced air flow to evaporate some of the water, removing heat from the remaining water. The water itself is recirculated from a cooling circuit through spray nozzles in the cooling tower into a storage tank below and returned to the cooling circuit.

A disadvantage of this process is that the warm water in the cooling tower provides a perfect breeding ground for Legionella Pneumophila bacteria.

In an attempt to remove this problem dry cooling apparatus have been used in place of wet cooling towers but suffer from the severe disadvantage that a dry cooling apparatus typically requires ten times the floor area of a wet cooling tower for efficient operation.

The present invention seeks to provide an improved cooling apparatus and method of cooling having a basically dry cooling action.

Accordingly, the present invention provides a dry or like cooling apparatus for an air conditioning system comprising:-
heat exchanger means for receiving a fluid conducted therethrough;
means for subjecting said heat exchanger means to a stream or flow of air to enable transfer of heat to take place from said fluid to said air stream for heat removal therewith, and
means for spraying water into said air stream in order to cool it prior to the heat exchanger means being subjected to the air stream.

Further in accordance with the invention the method of dry air or like cooling comprises:-
subjecting heat exchanger means to a stream or flow or air whereby heat is transferred from fluid conducted through the heat exchanger means to the air stream for removal therewith and wherein water is sprayed into said air stream in order to cool it prior to the subjecting of the heat exchanger means to the air stream.

Preferably said spraying means is adapted to produce a fine spray or mist of water in the air stream.

In a preferred form of the invention control means is provided for controlling spraying of the water in an intermittent or pulsed manner, the control means conveniently being controlled in dependence on the temperature of the air stream and/or the fluid.

The term "fluid" as used herein means either a gas or a liquid.

The present invention is further described hereinafter, by way of example, with reference to the accompanying drawings, in which:

Figure 1 is a schematic diagram of an air conditioning system using a preferred form of dry or like cooling apparatus according to the present invention;

Figure 2 is a psychrometric chart showing variation in air temperature with moisture content, and

Figure 3 is a diagrammatic cross sectional elevation of a typical arrangement of the cooling apparatus. Like parts are referred to by the same reference numerals throughout the drawings.

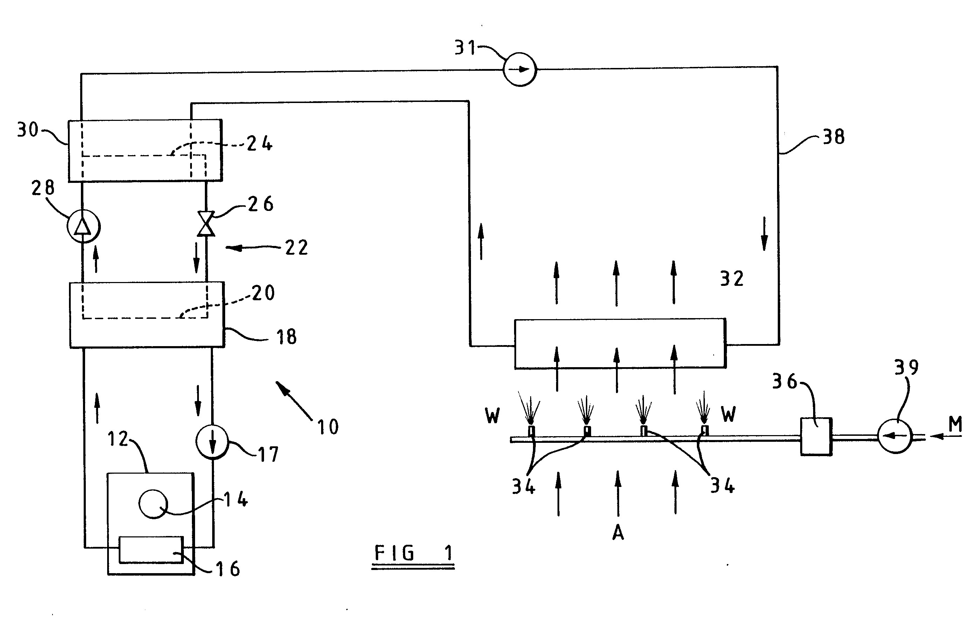

Figure 1 is a schematic diagram of an air conditioning system 10 for a building. Air is circulated through the building from a cooling unit 12 which uses a blower (fan) 14 to draw air over finned cooling pipes indicated at 16 through which cooling water is circulated from a vessel 18. Cold water is pumped at 17 from the vessel 18 through the cooling pipes 16 where heat is transferred from the air to the water, the warm water passing back to the vessel 18.

The vessel 18 contains an evaporator coil 20 of a closed circuit cooling system 22. The latter also contains a condenser coil 24 the outlet of which is coupled through an expansion valve 26 to an inlet of the evaporator coil 20 whose outlet in turn is connected through a compressor 28 to an inlet of the condenser coil 24. The cooling system 22 operates in a well known manner, liquid coolant being passed through the expansion valve 26 as a result of which the coolant evaporates, drawing heat from water in the vessel 18. The gaseous coolant is then compressed through the compressor 28, liquifying and transferring its heat to water in a further vessel 30 in which the condenser coil 24 is located.

Water in the vessel 30 is circulated by a pump 31 through a heat exchanger or cooler 32 which forms part of a dry cooling system mounted on the roof of the building.

The cooler 32 is generally in the form of an array of finned tubes in contact with which a stream or flow of dry air at ambient temperature is passed, heat being transferred from the water in the tubes to the air stream for heat removal therewith.

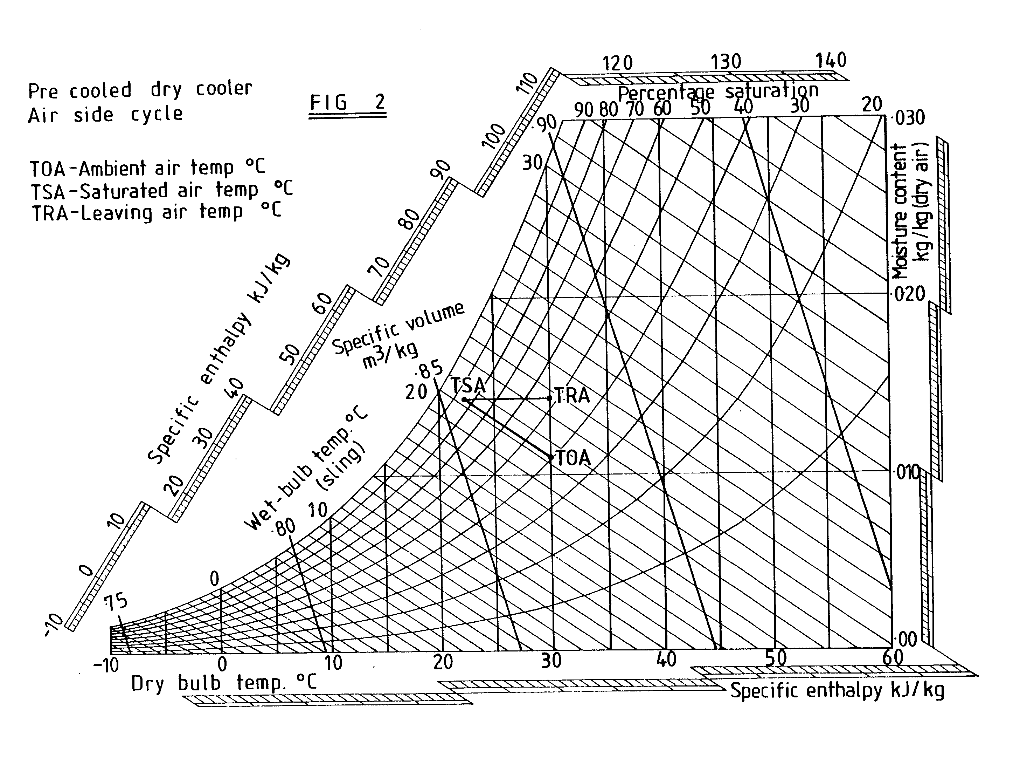

Whilst the ambient temperature is not too high, the size of the dry cooling apparatus can be kept relatively small. However, when the ambient temperature of the air rises to a relatively high level, in the region of, for example, 25°C, the efficiency of the dry cooling apparatus is considerably reduced. Therefore, to maintain efficiency a much greater surface area must be provided by the cooler 32 to improve heat transfer from the water to the air, resulting in a very large apparatus. To overcome this problem and in accordance with the invention , water W is sprayed from nozzles 34 in a very fine spray or mist into the air stream A upstream of the cooler 32. This saturates the air causing its temperature to drop (Figure 2) as the moisture content increases and the resulting cooler air is able, efficiently, to cool the water in the finned tubes of the cooler 32. This enables the size of the dry cooling system to be kept relatively small compared with existing dry cooling apparatus.

The water from the nozzles 34 can be sprayed vertically or from any suitable direction or directions towards the cooler 32 and can be take" direct from a mains water supply M by a pump 39. The resulting water vapour in the air stream A would be absorbed into the latter, thus avoiding the storage and recirculation of warm water which is highly conducive to the development of Legionella bacteria. Spraying can conveniently be controlled by use of a valve 36 to provide intermittent or pulsed spraying which is dependent on the temperature of the water circulating through the cooler 32 and/or on the temperature of the air stream A. Although very little of the sprayed water would normally settle on the tubes of the cooler 32, the use of intermittent or pulsed spraying has the added advantage that it would allow time for the tubes to dry in such circumstances. Temperature responsive operation of the valve 36 can be effected by suitably positioned sensor means arranged to control the valve.

The nozzles 34 may be of a low pressure type capable of providing a fine mist at widely varying mains water pressure.

In order to break up any scale deposits which may form in the nozzles 34 ultrasonic de-scaling may be used. This periodically vibrates the water stream to break up any such scale deposits into sub-micron particles which will then pass through the nozzles for dissipation with the sprayed water.

Under normal conditions, little or none of the sprayed water should be carried over the tubes of the cooler 32 so that "over spraying" and wastage of water can be kept to a minimum.

Preferably, the fin spacing on the cooler tubes at 32 is 2.5mm or thereabouts in order to avoid fouling problems. Also the fins are preferably polyester coated aluminium to avoid corrosion or the tubes and fins may be of plated copper or of stainless steel.

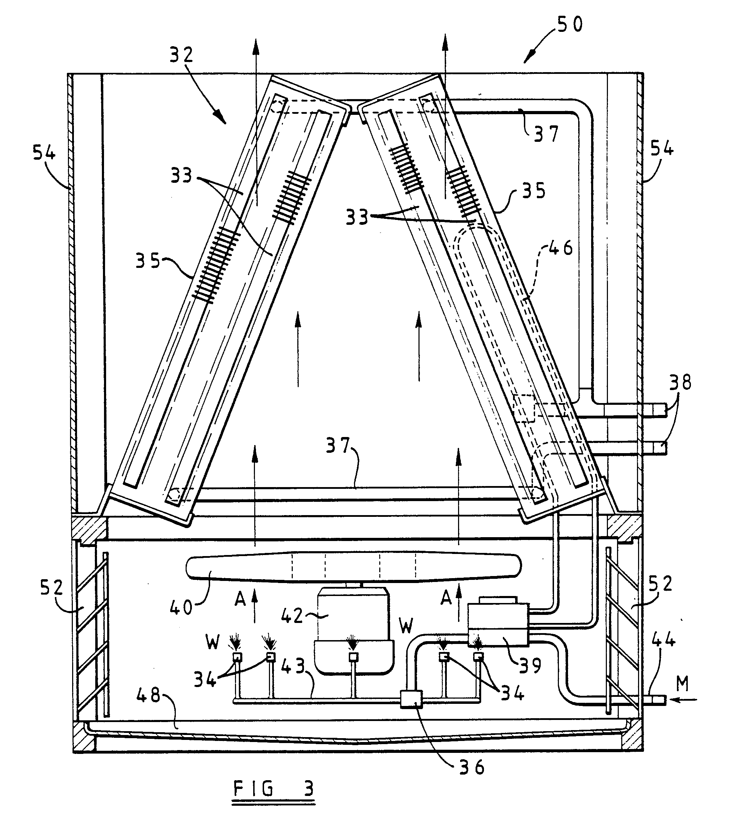

A practical form of the dry cooling apparatus is shown in Figure 3 in which the construction and arrangement is as follows:-

The heat exchanger or cooler 32 is shown in the form of two banks 33 of finned tubing following an extended path and carried by support structure 35 whereby the two banks 33 are in an inverted V-form arrangement, the tubing of each bank 33 being intercommunicated by pipework 37 to inflow and return flow connections of the circuit 38 to the vessel 30 containing the condensed coil 24 (see Figure 1).

An airstream A is directed vertically upwards to the two mutually inclined banks 33 of tubing by a fan 40 situated closely below them and driven for rotation about a vertical axis by an electric motor 42, the axis of rotation being shown centrally positioned in relation to the V-formation of the banks 33 of tubing in a symmetrical manner.

Positioned under the fan and again in a symmetrical arrangement are a series of water spray nozzles 34 for introducing a fine spray or mist of water W into the airstream A created by the rotating fan 40. For this purpose the nozzles 34 are shown carried in an equi-spaced manner by a circular or ring supply pipe 43 concentric with the fan 40 and supplied with water via a supply connection 44 from the mains M by a pump 39. The communication of the pump 39 with the ring pipe 43 includes a valve 36 such as a solenoid operated valve for effecting intermittent or pulsed supply of water to the nozzles 34 in the manner already described. A cooling loop 46 to the pump 39 is shown parallel with the right hand bank 33 of finned tubing.

For collection of any water falling or dripping from the nozzles 34 or from other parts of the apparatus, a shallow tray 48 e.g. of stainless steel, is provided under the ring pipe 43 to receive such water for dissipation by evaporation.

Practical tests have established that with the water sprays W in operation an improvement in the performance of the heat exchanger or cooler 32 of the order of 43% can be achieved.

For roof mounting or other suitable location, the above described dry cooling apparatus is shown contained within a housing 50 having a weather louvred lower part at 52 for adequate admission of air to the fan 40 whilst the walls of the upper part of the housing 50 are provided by acoustic screens 54 to minimise emission of noise from the apparatus. The housing 50 may also carry a control panel not shown for use in controlling and monitoring the operation of the fan motor 42, pump 39 and valve 36 together with temperature and any other required indication which may be relayed elsewhere e.g. to a convenient location in the building.

## Claims

1. Dry or like cooling apparatus primarily for an air conditioning system (10) comprising:-heat exchanger means (32) for receiving a fluid conducted therethrough; and
means (40) for subjecting said heat exchanger means (32) to a stream or flow of air to enable transfer of heat to take place from said fluid to said air stream for heat removal therewith, characterised in that
means (34) are provided for spraying water (W) into said air stream in order to cool it prior to the heat exchanger means being subjected to the air stream.

2. Dry or like cooling apparatus according to claim 1 further characterised in that said water spraying means (34) is adapted to introduce water into the air stream in a finely sprayed form or mist so as to be substantially absorbed therein.

3. Dry or like cooling apparatus according to claim 1 or 2 further characterised in that said water spraying means (34) is arranged (36) to effect intermittent or pulsed introduction of water in sprayed form or as a mist into the air stream.

4. Dry or like cooling apparatus according to claim 1, 2 or 3 further characterised in that the introduction of water into the air stream by the water spraying means (34) more particularly by intermittent or pulsed introduction (36), is arranged to be dependent on the temperature of fluid being conducted through the heat exchanger means and/or on the temperature of the air stream.

5. Dry or like cooling apparatus according to any of the preceding claims further characterised in that provision is included for subjecting water passing through the water spraying means (34) to vibration, such as ultrasonic vibration, in order to break up any build up of scale deposits for dissipation with the sprayed water, which scale might otherwise prevent or hinder the water spraying action.

6. Dry or like cooling apparatus according to any of the preceding claims further characterised in that the means (40) for subjecting the heat exchanger (32) to a stream or flow of air is arranged to direct the latter vertically in relation to the heat exchanger means.

7. Method of dry or like cooling primarily for an air conditioning system (10) comprising subjecting heat exchanger means (32) to a stream or flow of air whereby heat is transferred from fluid conducted through the heat exchanger means to the air stream for removal therewith characterised in that water (W) is sprayed (34) into said air stream in order to cool it prior to the subjecting of the heat exchanger (32) means to the air stream.

8. Method of dry or like cooling according to claim 7 further characterised in that water is sprayed into the air stream in a finely divided form or mist so as to be substantially absorbed therein.

9. Method of dry or like cooling according to claim 7 or 8 further characterised in that water is sprayed into the air stream in an intermittent or pulsed manner.

10. Method of dry or like cooling according to claim 9, further characterised in that spraying of water into the air stream particularly in an intermittent or pulsed manner, is effected in dependence of the temperature of fluid passing through the heat exchanger means and/or on the temperature of the air stream.

FIG 1

EP 0 389 190 A2

Pre cooled dry cooler
Air side cycle

FIG 2

TOA -Ambient air temp °C
TSA -Saturated air temp °C
TRA -Leaving air temp °C

EP 0 389 190 A2

FIG 3